# EUROPEAN PATENT APPLICATION

(11) **EP 4 678 530 A1**
(43) Date of publication of application: **14.01.2026**
(21) Application number: 25732303.0
(22) Date of filing: 20.02.2025
(51) Int. Cl.: B63B 79/30, B63B 43/18, B63B 79/10, B63B 79/40, G01C 21/20, G08G 3/02, B63B 49/00, B63B 79/20, B63H 21/21

(54) **METHOD AND DEVICE FOR DETERMINING VALIDITY OF AVOIDANCE PATH BY USING PLURALITY OF BUFFERS**

(30) Priority: 08.05.2024 KR 20240060789; 28.11.2024 KR 20240173272
(71) Applicant: Avikus Co., Ltd., Seoul 06234 (KR)
(72) Inventor: KO, Kwangsung, Seoul 06234 (KR); JUNG, Doyeon, Seoul 06234 (KR)
(74) Representative: Zacco Sweden AB
(86) International application number: PCT/KR2025/099496
(87) International publication number: WO 2025/234865

(57) **Abstract**

An apparatus includes at least one memory and at least one processor, wherein the at least one processor generates a first buffer by using information of a target vessel, generates a second buffer by using information of an own vessel, generates an avoidance path for avoiding the target vessel at risk of collision with the own vessel by using the first buffer and the second buffer, and determines whether the avoidance path is valid by using the first buffer and the second buffer.

## Description

### Technical Field

The present disclosure relates to a method and apparatus for determining the validity of an avoidance path using a plurality of buffers.

### Background Art

When it is determined that there is a possibility of collision with a target vessel during the voyage of a vessel, the vessel derives and navigate an avoidance path to avoid collision with the target vessel rather than following the existing sailing route.

However, even when sailing along the derived avoidance path, the avoidance path may need to be modified depending on the condition of an own vessel or target vessels. In addition, in these cases, there was a problem that repeated corrections to the avoidance path caused confusion to navigators and increased sailing time.

Therefore, the present disclosure provides a method that does not confuse navigators by determining whether an avoidance path is valid and not unnecessarily modifying the avoidance path.

### Disclosure of invention

### Technical Problem

Provided are a method and apparatus for determining the validity of an avoidance path by using a plurality of buffers. Provided is also a computer-readable recording medium having recorded thereon a program for executing the method on a computer. The technical problems to be solved are not limited to those mentioned above, and other technical problems may exist.

### Solution to Problem

According to one aspect of the present disclosure, a method of determining validity of an avoidance path by using a plurality of buffers includes generating a first buffer by using information of a target vessel that is at risk of collision with an own vessel; generating a second buffer by using information of the own vessel; determining whether the avoidance path for the own vessel to avoid the target vessel is valid based on whether a first condition related to the first buffer and a second condition related to the second buffer are satisfied; and generating a command for controlling the own vessel to follow the avoidance path in response to a result of determining that the avoidance path is valid.

According to another aspect of the present disclosure, an apparatus for determining validity of an avoidance path by using a plurality of buffers includes a memory storing at least one program; and at least one processor configured to execute the at least one program, wherein the at least one processor is configured to generate a first buffer by using information of a target vessel, generate a second buffer by using information of an own vessel, generate the avoidance path for avoiding the target vessel at risk of collision with the own vessel by using the first buffer and the second buffer, and determine whether the avoidance path is valid by using the first buffer and the second buffer.

According to a further aspect of the present disclosure, a computer-readable recording medium includes a recording medium having recorded thereon a program for executing the method on a computer.

### Advantageous Effects of invention

It may be possible to avoid unnecessary actions that continuously modify a derived avoidance path to avoid collisions between an own vessel and target vessels.

Additionally, confusion for navigators caused by an avoidance path being continuously modified may be prevented.

Additionally, unnecessary data computation may be reduced by preventing modification of an avoidance path.

However, the effects of the embodiments are not limited to the effects mentioned above, and other effects not mentioned can be clearly understood by one of ordinary skill in the art from the description of the present invention.

### Brief Description of Drawings

FIG. 1 is a diagram illustrating an example of a method of determining the validity of an avoidance path by using a plurality of buffers, according to an embodiment.
FIG. 2 is a schematic block diagram illustrating an example of an apparatus for determining the validity of an avoidance path by using a plurality of buffers, according to an embodiment.
FIG. 3 is a flowchart illustrating an example of a method of determining the validity of an avoidance path by using a plurality of buffers, according to an embodiment.
FIG. 4A is a drawing illustrating an example of a first buffer according to an embodiment, and FIG. 4B is a drawing illustrating an example of a second buffer according to an embodiment.
FIG. 5 is a diagram illustrating an example of a method of generating an avoidance path, according to an embodiment.
FIG. 6A is a drawing illustrating an example of a case where a first condition is satisfied, according to an embodiment, and FIG. 6B is a drawing illustrating an example of a case where the first condition is not satisfied.
FIG. 7A is a drawing illustrating an example of a case where a second condition is satisfied, according to an embodiment, and FIG. 7B is a drawing illustrating an example of a case where the second condition is not satisfied.
FIG. 8 is a diagram illustrating an example of a method of newly generating an avoidance path, according to an embodiment.

### Best Mode for Carrying out the Invention

An apparatus includes at least one memory and at least one processor, wherein the at least one processor generates a first buffer by using information of a target vessel, generates a second buffer by using information of an own vessel, generates an avoidance path for avoiding the target vessel at risk of collision with the own vessel by using the first buffer and the second buffer, and determines whether the avoidance path is valid by using the first buffer and the second buffer.

### Mode for the Invention

The terms used in the embodiments are selected from commonly used terms as much as possible, but these may vary with the intention of engineers working in the field, case law, the emergence of new technology, etc. Additionally, in certain cases, there are terms arbitrarily selected by the applicant, and in such cases, their meanings will be described in detail in relevant parts of the description. Therefore, the terms used herein should be defined based on the meanings thereof and the overall content of the specification, rather than simply the names of the terms.

Throughout the specification, when a part is said to "include" a component, this does not mean that the part excludes other components, but rather that the part may include other components, unless otherwise clearly contradicted by context. As used herein, terms, such as "unit" and "module", may indicate a unit which processes at least one function or operation and may be implemented by hardware, software, or a combination thereof.

When terms including ordinal numbers, such as "first," "second," etc. may be used to describe various components, such components should not be limited by these terms. The above terms may be used to distinguish one component from another.

The present disclosure will be described in detail with reference to the attached drawings below. However, the embodiments may be implemented in various different forms and are not limited to the examples described herein.

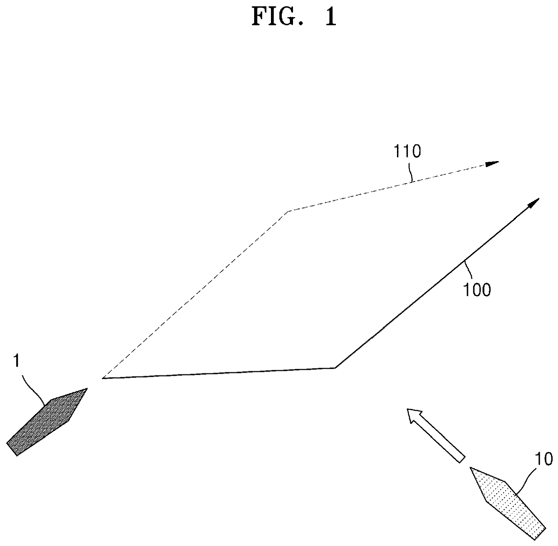

FIG. 1 is a diagram illustrating an example of a method of determining the validity of an avoidance path by using a plurality of buffers, according to an embodiment.

Referring to FIG. 1, when an own vessel 1 is sailing on an existing path 100, there is a possibility of collision between the own vessel 1 and a target vessel 10 depending on their respective travelling directions and speeds.

In this case, the navigation system of the own vessel 1 may derive an avoidance path 110 to avoid a collision with the target vessel 10.

The traveling directions and speeds of the own vessel 1 and the target vessel 10 may continuously change, and accordingly, the avoidance path 110 may also continuously change. When the avoidance path 110 changes, a confirmation process, in which a navigator confirms the avoidance path 110, is required.

Therefore, when the avoidance path 110 is continuously changed, the confirmation process is continuously required, causing confusion to the navigator. In addition, unnecessary data calculations are required to continuously and newly derive the avoidance path 110, and a sailing time may also increase.

Accordingly, when the avoidance path 110 is derived, whether the derived avoidance path 110 is valid may be determined so that unnecessary repeated generation of the avoidance path 110 and confusion to a navigator may be prevented.

Whether the avoidance path 110 is valid may be determined using a plurality of buffers, and the buffers may include a buffer that considers a movement of the own vessel 1, a buffer that considers a movement of the target vessel 10, etc., and details thereof are described below. Here, a buffer may mean a certain area or zone for determining whether the avoidance path 110 is valid.

Accordingly, by using a buffer that considers a movement of the own vessel 1 and a buffer that considers a movement of the target vessel 10, whether the avoidance path 110 is valid may be determined considering both the own vessel 1 and the target vessel 10, regardless of whether the target vessel 10 is in a moving state, that is, dynamic, or is static.

In addition, when the avoidance path 110 is determined to be valid, navigation may continue along the avoidance path 110, and when the avoidance path 110 is determined to be invalid, a new avoidance path may be derived. However, even when a new avoidance path is derived, it may be determined whether the new avoidance path 110 is valid.

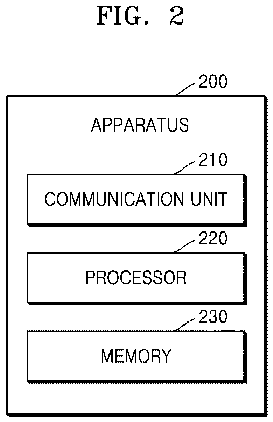

FIG. 2 is a schematic block diagram illustrating an example of an apparatus for determining the validity of an avoidance path by using a plurality of buffers, according to an embodiment.

Referring to FIG. 2, an apparatus 200 for determining the validity of an avoidance path by using a plurality of buffers (hereinafter, referred to as an apparatus) may include a communication unit 210, a processor 220, and a memory 230. Components only related to an embodiment are shown in the apparatus 200 of FIG. 2. Therefore, it is obvious to one of ordinary skill in the art that other general components may be included in addition to the components illustrated in FIG. 2.

The communication unit 210 may include one or more components that enable wired/wireless communication with an external server or an external device. For example, the communication unit 210 may include a short-range communication unit (not shown) and a mobile communication unit (not shown) for communication with an external server or an external device.

The processor 220 controls the overall operation of the apparatus 200. For example, the processor 220 may control an input unit (not shown), a display (not shown), the communication unit 210, the memory 230, etc., by executing programs stored in the memory 230.

The processor 220 may be implemented using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

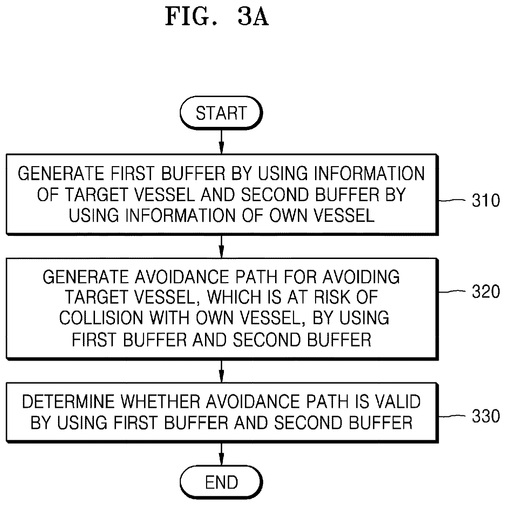

The processor 220 may control the operation of the apparatus 200 by executing programs stored in the memory 230. For example, the processor 220 may perform at least a part of the method of determining the validity of an avoidance path by using a plurality of buffers, which is described with reference to FIGS. 3 to 8.

The memory 230 is hardware that stores various data processed in the apparatus 200 and may store a program for processing and controlling the processor 220.

For example, various data, such as vessel specification information, vessel navigation information, vessel navigation image information, weather forecast information, maritime information, vessel control information, object information, and data generated according to the operation of the processor 220, may be stored in the memory 230. Additionally, the memory 230 may store an operating system (OS) and at least one program (e.g., a program required for the operation of the processor 220).

The memory 230 may include random access memory (RAM) such as dynamic random access memory (DRAM) or static random access memory (SRAM), read-only memory (ROM), electrically erasable programmable read-only memory (EEPROM), CD-ROM, Blu-ray, other optical disk storage, hard disk drive (HDD), solid state drive (SSD), or flash memory.

FIG. 3 is a flowchart illustrating an example of a method of determining the validity of an avoidance path by using a plurality of buffers, according to an embodiment.

Referring to FIG. 3, a method of determining the validity of an avoidance path by using a plurality of buffers may include operations 310 to 330. However, the method is not limited thereto, and other general operations than those illustrated in FIG. 3 may be further included in the method of determining the validity of an avoidance path by using a plurality of buffers. Additionally, as described above with reference to FIGS. 1 and 2, at least one of the operations in the flowchart illustrated in FIG. 3 may be processed by a processor.

When there is a risk of collision between an own vessel and at least one target vessel, an autonomous navigation processing device may generate an avoidance path to avoid the collision between the own vessel and the target vessel. For example, the avoidance path may be generated based on situations of the own vessel.

However, even after an avoidance path is generated, situations in which an avoidance path needs to be newly generated, such as a situation in which there is a risk of collision between an own vessel and a new target vessel, continue to occur, so new avoidance paths may be continuously generated. As described above, when new avoidance paths are continuously generated unnecessarily, this may cause confusion to a navigator or may cause unnecessary data calculations to be performed, which may have a negative impact on the operation of the own vessel.

Therefore, the present disclosure is intended to prevent avoidance paths from newly generated unnecessarily, simultaneously considering the steering performance of an own vessel and environmental changes, such as changes in speed of target vessels, discovery of new target vessel, and environmental disturbances around the own vessel. Unless there are special circumstances, a safe avoidance path is to be maintained to give a sense of security to a navigator.

The method of determining the validity of an avoidance path by using a plurality of buffers, which is described with reference to FIGS. 1 to 8, may check the validity of an avoidance path, simultaneously considering the safety range and dynamics of an own vessel by using a plurality of buffers, such as a first buffer corresponding to a collision-safe area and a second buffer corresponding to a dynamics-allowed area.

In operation 310, a processor may generate a first buffer by using information on a target vessel, which is at risk of collision with the own vessel, and may generate a second buffer by using information on the own vessel.

Prior to this, the processor may determine whether there is an avoidance path to avoid the target vessel that is at risk of collision with the own vessel. Accordingly, the processor may generate the first buffer and the second buffer, based on a result of determining that there is no avoidance path, and may generate an avoidance path by using the generated first buffer and second buffer.

For example, the processor may detect a target vessel in real time during the voyage of the own vessel and determine the risk of collision between the detected target vessel and the own vessel. Additionally, when determining that there is a risk of collision between the own vessel and the target vessel, the processor may derive an avoidance path to avoid a collision with the target vessel.

The processor may generate the first buffer by using information on the target vessel in response to determining that there is no avoidance path for avoiding the target vessel. For example, the processor may generate the first buffer based on at least one of type information of the target vessel, the target vessel's specification information, and the target vessel's operation state information, which are included in the information on the target vessel.

The processor may generate a second buffer by using the information on the own vessel in response to determining that there is no avoidance path for avoiding the target vessel. For example, the processor may generate the second buffer based on at least one of the own vessel's steering performance information, the target vessel's specification information, and the own vessel's environment information, which are included in the information on the own vessel.

In operation 320, the processor may generate an avoidance path for avoiding the target vessel, which is at risk of collision with the own vessel, by using the first buffer and the second buffer.

For example, the processor may generate a safety range by using the first buffer and the second buffer and may generate the avoidance path based on the safety range.

For example, the processor may generate a safety range on the basis of the own vessel by using the first buffer and the second buffer. Therefore, the processor may generate an avoidance path on which no target vessels exist in the safety range on the basis of the own vessel. For example, the processor may generate a safety range on the basis of the target vessel by using the first buffer and the second buffer. Therefore, the processor may generate the avoidance path on which the own vessel does not exist in the safety range based on the target vessel.

For example, the processor may generate a safety range by using the Minkowski sum of the first buffer and the second buffer. Here, the Minkowski sum is a way of defining the sum of two sets A and B in geometry and may be defined primarily in vector spaces. That is, the Minkowski sum may be a way of obtaining a new set by combining all vectors of A and all vectors of B.

In operation 330, the processor may determine whether the avoidance path is valid by using the first buffer and the second buffer. Whether the avoidance path for the own vessel to avoid the target vessel is valid may be determined based on whether at least one of a first condition related to the first buffer and a second condition related to the second buffer is satisfied. In this case, the processor may determine whether the avoidance path is valid at preset intervals.

For example, the processor may determine whether at least one of the first condition related to the first buffer and the second buffer and the second condition related to the second buffer is satisfied and may determine that the avoidance path is valid in response to a result of determining that at least one of the first condition and the second condition is satisfied. Here, the first condition may be a condition requiring that the distance between the own vessel and the target vessel is greater than the safety range generated using the first buffer and the second buffer while the own vessel is sailing on the avoidance path. Additionally, the second condition may be a condition requiring that the position of the own vessel remains within the second buffer while the own vessel is sailing on the avoidance path. For example, the processor may determine that the avoidance path is valid in response to a result of determining that both the first condition and the second condition are satisfied. For example, the processor may determine that the avoidance path is valid in response to a result of determining that either the first condition or the second condition is satisfied.

For example, the processor may generate a control command for sailing on the avoidance path in response to a result of determining that the avoidance path is valid. For example, the processor may generate a new collision avoidance path in response to a result of determining that the avoidance path is invalid. Additionally, the processor may newly generate an avoidance path when a distance difference between the generated new collision avoidance path and the avoidance path is greater than a preset distance.

In a further example, the processor may use the first buffer and the second buffer to determine whether the initial path of the own vessel is valid. That is, the processor may determine whether the initial path when the own vessel first starts sailing is valid and may generate a new path or start sailing on the initial path accordingly.

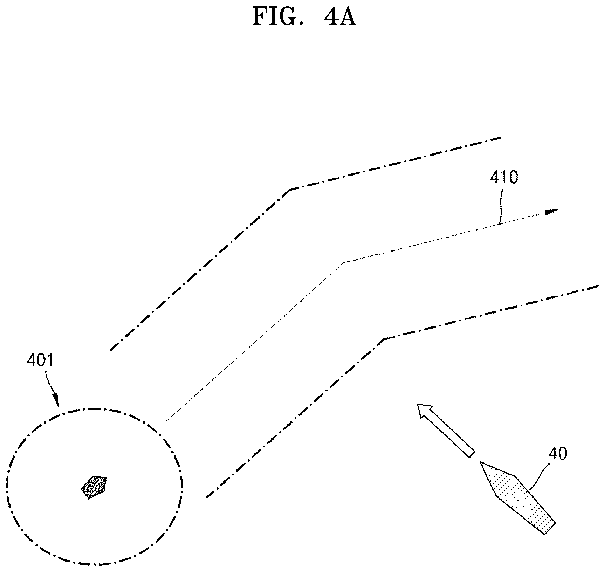

Hereinafter, the method of determining the validity of an avoidance path by using a plurality of buffers, which is described above with reference to FIG. 3, will be described in detail with reference to FIGS. 4a to 8.

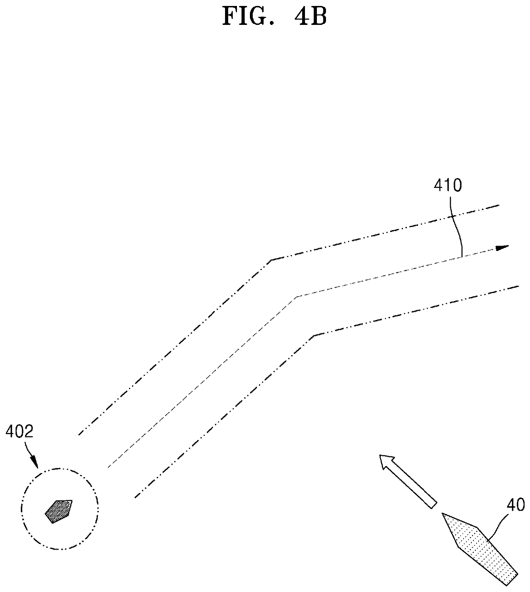

FIG. 4A is a drawing illustrating an example of a first buffer according to an embodiment, and FIG. 4B is a drawing illustrating an example of a second buffer according to an embodiment.

An example of a method of generating, by a processor, a first buffer and a second buffer is described with reference to FIGS. 4a and 4b below.

First, referring to FIG. 4A, the processor may generate a first buffer 401 by using information on a target vessel 40 at risk of collision with an own vessel 4.

For example, the first buffer 401 may refer to a safety radius generated based on an avoidance path 410. In other words, the first buffer 401 may be an area for determining whether the own vessel 4 and the target vessel 40 maintain a safe distance while the own vessel 4 is sailing along the avoidance path 410.

The first buffer 401 may be determined based on information on the target vessel 40. The first buffer 401 may be continuously changed according to the information on the target vessel 40. For example, the traveling direction, traveling speed, etc. of the target vessel 40 may continuously change over time, and accordingly, the first buffer 401 may also continuously change. For example, the size, traveling direction, and traveling speed of the target vessel 40 and the first buffer 401 may increase proportionally.

For example, information on the target vessel 40 may be information already obtained to determine the risk of collision between the own vessel 4 and the target vessel 40. For example, information on the target vessel 40 may be information obtained in real time.

Here, information on the target vessel 40 may include type information of the target vessel 40, specification information of the target vessel 40, and operation state information of the target vessel 40. For example, the type information of the target vessel 40 may include information, such as a large vessel, a small vessel, a fishing vessel, a jet ski, etc. Additionally, the specification information of the target vessel 40 may include information, such as the size, height, length, etc. of the target vessel 40. In addition, the operation state information of the target vessel 40 may include information, such as whether the target vessel 40 is sailing normally, is fishing, or has lost control.

For example, the first buffer 401 may be generated by user input. Additionally, the first buffer 401 may be generated by the operation of the processor. Additionally, the first buffer 401 may be generated by user input and then modified by the operation of the processor.

For example, a user or the processor may generate the first buffer 401 based on the size, traveling speed, traveling direction, type, operation state, etc. of the target vessel 40. Additionally, the processor may modify the first buffer 401 generated by user input by using the information of the target vessel 40 obtained in real time.

Referring to FIG. 4B, the processor may generate a second buffer 402 by using information of the own vessel 4.

For example, the second buffer 402 may refer to a dynamics buffer generated based on the first buffer 401 and the avoidance path 410. In other words, the second buffer 402 may be an area for determining whether the own vessel 4 is sailing within a certain range from the avoidance path 410 while the own vessel 4 is sailing along the avoidance path 410.

The second buffer 402 may be determined based on the information of the own vessel 4. The second buffer 402 may be continuously changed according to the information of the own vessel 4. Here, the information of the own vessel 4 may include steering performance information of the own vessel 4, specification information of the own vessel 4, and environmental information of the own vessel 4. For example, the steering performance information of the own vessel 4 may include information, such as stopping distance, turning ability, etc. Additionally, the specification information of the own vessel 4 may include information, such as the size, height, length, etc. of the own vessel 4. Additionally, the environmental information of the own vessel 4 may include information, such as wind, wave height, water depth, etc.

The processor may generate the second buffer 402, that is, an area where the own vessel 4 may be located while sailing along the avoidance path 410, based on the steering performance information of the own vessel 4, the specification information of the own vessel 4, and the environmental information of the own vessel 4. For example, the steering performance of the own vessel 4, the surrounding environment of the own vessel 4, etc. may continuously change over time, and accordingly, the second buffer 402 may also continuously change. For example, the size and the steering performance of the own vessel 4 and the second buffer 402 may be increased proportionally. For example, disturbance according to the environmental information of the own vessel 4 and the second buffer 402 may increase proportionally.

When the processor determines that the avoidance path 410 does not exist, the processor may generate a new collision avoidance path or generate a control command for generating a new collision avoidance path. Accordingly, the processor may generate the first buffer 401 and the second buffer 402, which have been described above, to generate a collision avoidance path.

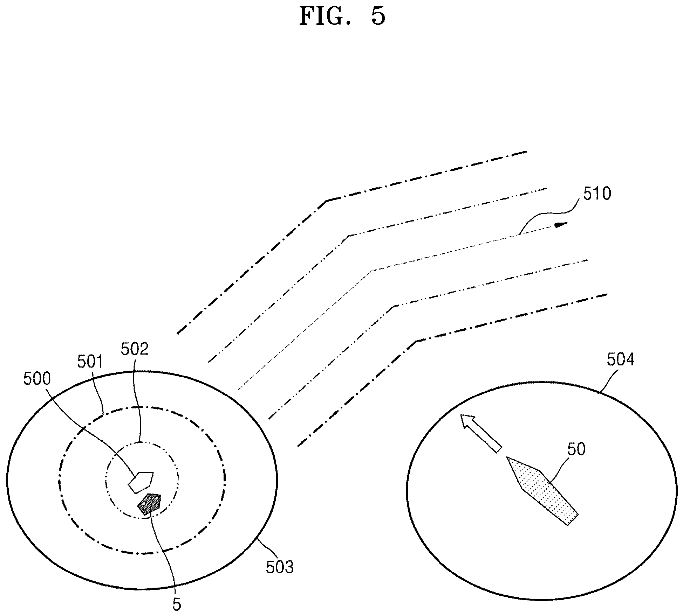

FIG. 5 is a diagram illustrating an example of a method of generating an avoidance path, according to an embodiment.

An example of a method of generating, by a processor, an avoidance path is described below with reference to FIG. 5.

Referring to FIG. 5, the processor may generate an avoidance path 510 using a first buffer 501 and a second buffer 502.

For example, the processor may generate safety ranges 503 and 504 by using the first buffer 501 and the second buffer 502 and generate the avoidance path 510 based on the generated safety ranges 503 and 504.

For example, the processor may generate the safety range 503 based on an own vessel 5 by using the first buffer 501 and the second buffer 502. Accordingly, the processor may generate the avoidance path 510, on which no target vessel 50 exists in the safety range 503 based on the own vessel 5. For example, the processor may generate the safety range 504 based on the target vessel 50 by using the first buffer 501 and the second buffer 502. Accordingly, the processor may generate the avoidance path 510, on which the target vessel 50 does not exist in the safety range 504 based on the target vessel 50.

For example, the safety range 503 based on the own vessel 5 and the safety range 504 based on the target vessel 50 may have the same size but are not limited thereto and may be generated in different sizes depending on situations of the own vessel 5 or the target vessel 50.

For example, the processor may calculate the Minkowski sum of the first buffer 501 and the second buffer 502 and generate the safety ranges 503 and 504 by using the calculated Minkowski sum. Accordingly, each of the radius of the safety range 503 based on the own vessel 5 and the radius of the safety range 504 based on the target vessel 50 may be equal to the sum of the radius of the first buffer 501 and the radius of the second buffer 502.

For example, the processor may calculate the sum of all vectors contained in the first buffer 501 and all vectors contained in the second buffer 502. Additionally, the processor may generate the safety ranges 503 and 504 by using the sum of the calculated vectors.

Accordingly, the processor may generate the avoidance path 510 on which the own vessel 5 does not exist in the safety range 504 based on the target vessel 50 while the own vessel 5 is navigating along the avoidance path 510.

The processor may generate a virtual vessel 500 that navigates accurately following the avoidance path 510.

For example, the processor may generate the avoidance path 510, on which the own vessel 5 navigates within the area of the second buffer 502 from the virtual vessel 500. That is, while sailing along the avoidance path 510, the own vessel 5 may have to continuously remain within the area of the second buffer 502 from the virtual vessel 500.

The processor may use the first buffer 501 and the second buffer 502 to determine whether the avoidance path 510 is valid.

For example, the processor may determine whether at least one of a first condition related to the first buffer 501 and the second buffer 502 and a second condition related to the second buffer 502 is satisfied, and in response to a result of determining that at least one of the first condition and the second condition is satisfied, determine that the avoidance path 510 is valid. Here, the first condition may be a condition requiring that the distance between the own vessel 5 and the target vessel 50 while the own vessel 5 is navigating along the avoidance path 510 is greater than the safety range 503 or 504, which is the Minkowski sum of the first buffer 501 and the second buffer 502, and the second condition may be a condition requiring that the location of the own vessel 5 is within the second buffer 502 while the own vessel 5 is navigating along the avoidance path 510.

For example, when the target vessel 50 is within a safety radius, i.e., the safety range 503 based on the own vessel 5 while the own vessel 5 is navigating along the avoidance path 510, the avoidance path 510 is not safe, and therefore, the processor may determine that the avoidance path 510 is invalid. Conversely, when the own vessel 5 is within the safety range 504 of the target vessel 50 while the own vessel 5 is navigating along the avoidance path 510, the avoidance path 510 is not safe, and therefore, the processor may determine that the avoidance path 510 is invalid.

In addition, because the avoidance path 510 is derived assuming that the own vessel 5 navigates along the avoidance path 510, the processor may determine that the avoidance path 510 is invalid when the own vessel 5 does not exist within a dynamic buffer, i.e., the second buffer 502, while the own vessel 5 is navigating along the avoidance path 510.

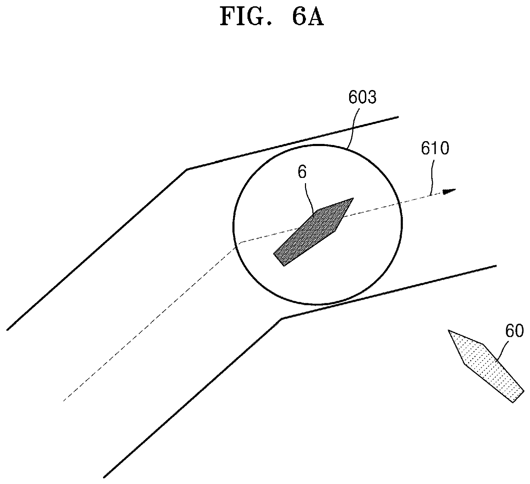

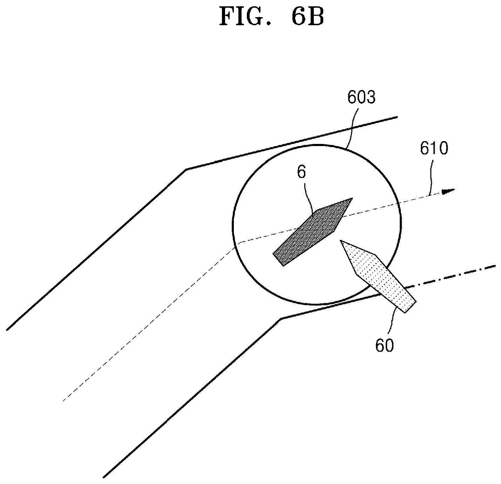

FIG. 6A is a drawing illustrating an example of a case where the first condition is satisfied, according to an embodiment, and FIG. 6B is a drawing illustrating an example of a case where the first condition is not satisfied.

An example of a method of determining, by a processor, whether the first condition is satisfied is described below with reference to FIGS. 6a and 6b.

First, referring to FIG. 6A, the processor may determine that the first condition is satisfied based on the locations of an own vessel 6 and a target vessel 60.

For example, the processor may use the traveling direction, traveling speed, etc. of each of the own vessel 6 and the target vessel 60 to derive the location of each of the own vessel 6 and the target vessel 60 when the own vessel 6 is closest to the target vessel 60 while the own vessel 6 is navigating along an avoidance path 610.

For example, the processor may derive the distance between the own vessel 6 and the target vessel 60 when the own vessel 6 and the target vessel 60 are located closest to each other. In other words, the processor may derive the shortest distance to the target vessel 60 while the own vessel 6 is navigating along the avoidance path 610. Accordingly, the processor may determine that the first condition is satisfied when the derived shortest distance between the own vessel 6 and the target vessel 60 is greater than a safety range 603 based on the own vessel 6.

For example, the processor may determine that the first condition is satisfied in the case where the location of the target vessel 60 when the own vessel 6 is closest to the target vessel 60 is outside the safety range 603 based on the own vessel 6.

Although not shown in FIG. 6A, it is obvious to one of ordinary skill in the art that the first condition may be determined to be satisfied when the location of the own vessel 6 when the own vessel 6 is closest to the target vessel 60 is outside a safety range based on the target vessel 60.

Referring to FIG. 6B, the processor may determine that the first condition is not satisfied based on the locations of the own vessel 6 and the target vessel 60.

For example, the processor may determine that the first condition is not satisfied in the case where the distance between the own vessel 6 and the target vessel 60 when the own vessel 6 is closest the target vessel 60, i.e., the shortest distance between the own vessel 6 and the target vessel 60, is less than the safety range 603 based on the own vessel 6.

For example, the processor may determine that the first condition is not satisfied in the case where the location of the target vessel 60 when the target vessel 60 is closest to the own vessel 6 is within the safety range 603 based on the own vessel 6.

Although not shown in FIG. 6B, it is obvious to one of ordinary skill in the art that it may be determined that the first condition is not satisfied in the case where the location of the own vessel 6 when the own vessel 6 is closest to the target vessel 60 is within a safety range based on the target vessel 60.

Additionally, the processor may determine whether the first condition is satisfied regardless of whether the target vessel 60 is dynamic or static. Accordingly, the processor may determine whether the avoidance path 610 is valid considering not only the target vessel 60 but also other obstacles than vessels.

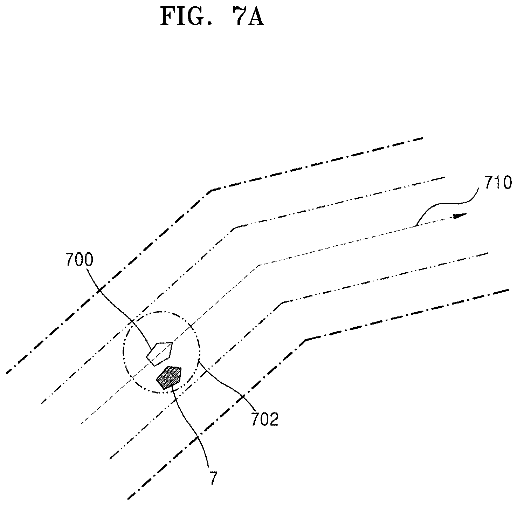

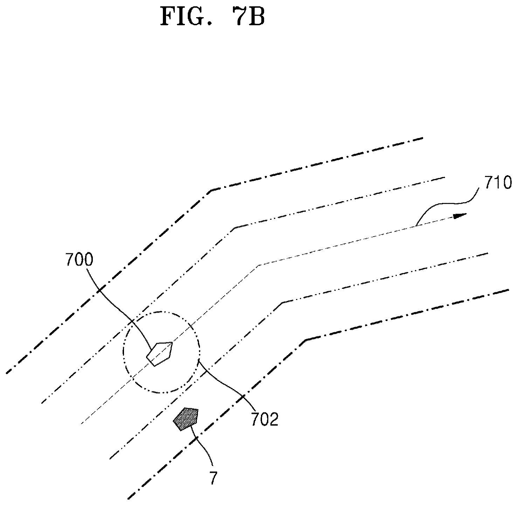

FIG. 7A is a drawing illustrating an example of a case where the second condition is satisfied, according to an embodiment, and FIG. 7B is a drawing illustrating an example of a case where the second condition is not satisfied.

An example of a method of determining, by a processor, whether the second condition is satisfied is described below with reference to FIGS. 7a and 7b.

First, referring to FIG. 7A, the processor may determine that the second condition is satisfied based on the location of an own vessel 7.

For example, the processor may derive the location of the own vessel 7, which is navigating along an avoidance path 710, by using the steering performance of the own vessel 7, the specifications of the own vessel 7, the surrounding environment of the own vessel 7, etc.

The processor may determine that the avoidance path 710 is valid in the case where the location of the own vessel 7 exists within a second buffer 702 while the own vessel 7 is navigating along the avoidance path 710. For example, the processor may determine that the avoidance path 710 is valid in the case where the own vessel 7 is within the range of the second buffer 702 from a virtual vessel 700.

In other words, because the avoidance path 710 is derived by assuming that the own vessel 7 navigates along the avoidance path 710, the second buffer 702 may be an area where the own vessel 7 may be seen to have navigated along the avoidance path 710.

For example, the processor may generate the virtual vessel 700 that navigates accurately following the avoidance path 710. Accordingly, the processor may determine that the own vessel 7 is navigating along the avoidance path 710 when the own vessel 7 is sailing within the range of the second buffer 702 from the virtual vessel 700.

For example, the processor may determine that the avoidance path 710 is valid in the case where the location of the own vessel 7 remains within the second buffer 702 based on the virtual vessel 700 throughout the navigation along the avoidance path 710.

Referring to FIG. 7B, the processor may determine that the second condition is not satisfied based on the location of the own vessel 7.

The processor may determine that the avoidance path 710 is invalid in the case where the location of the own vessel 7 exists outside the second buffer 702 while the own vessel 7 is navigating along the avoidance path 710. For example, the processor may determine that the avoidance path 710 is invalid in the case where the own vessel 7 is outside the range of the second buffer 702 from the virtual vessel 700.

In other words, the own vessel 7 may not be considered to be sailing along the avoidance path 710 when the own vessel 7 exists outside the second buffer 702 based on the virtual vessel 700, and thus, the avoidance path 710 may be determined to be invalid.

Additionally, the processor may determine in real time or at preset intervals whether the avoidance path 710 is valid.

For example, the processor may continuously detect the presence of the target vessel 70 and determine whether the avoidance path 710 is valid each time the target vessel 70 is detected. For example, the processor may determine whether the avoidance path 710 is valid at intervals preset by a user.

Additionally, the processor may determine that the avoidance path 710 is valid or invalid only when results of determining whether the avoidance path 710 is valid are the same for a certain time period or a certain number of times. That is, the processor may filter results of determining whether the avoidance path 710 is valid and may ultimately determine the validity of the avoidance path 710.

For example, when determining the validity of the avoidance path 710 in real time, the processor may determine that the avoidance path 710 is valid only when the avoidance path 710 has been determined to be valid for "n" seconds. For example, when determining the validity of the avoidance path 710 at preset intervals, the processor may determine that the avoidance path 710 is valid only when the processor determines that the avoidance path 710 is valid for "m" intervals. When the avoidance path 710 is determined to be invalid, the same described above also applies, and thus, redundant descriptions thereof are omitted.

For example, the processor may generate a control command for navigating along the avoidance path 710 when the avoidance path 710 is determined to be valid. That is, the processor may generate a control command for continuing navigating along the valid avoidance path 710 until a new collision risk-prone target vessel appears.

Additionally, the processor may generate a new collision avoidance path when a new collision-prone target vessel appears.

For example, the processor may also generate a new collision avoidance path when the avoidance path 710 is determined to be invalid. Additionally, the processor may generate another collision avoidance path when a distance difference between the generated new collision avoidance path and the existing avoidance path 710 is greater than or equal to a preset distance.

In an additional example, the processor may use a first buffer and a second buffer to determine whether the initial path as well as the avoidance path 710 is valid.

For example, the processor may determine whether the initial path of the own vessel 7 is valid based on information of the own vessel 7 and information of a target vessel. Therefore, the processor may generate a new path when the initial path of the own vessel 7 is determined to be invalid.

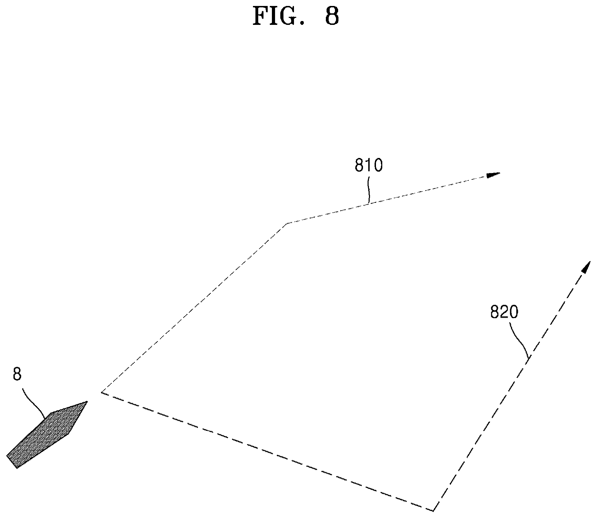

FIG. 8 is a diagram illustrating an example of a method of newly generating an avoidance path, according to an embodiment.

An example of a method of newly generating, by a processor, an avoidance path is described below with reference to FIG. 8.

Referring to FIG. 8, the processor may generate a new collision avoidance path 820.

For example, the processor may generate a new collision avoidance path 820 when a new collision risk-prone target vessel appears or when an existing avoidance path 810 is determined to be invalid.

Additionally, when the new collision avoidance path 820 is generated, the processor may determine whether the new collision avoidance path 820 that has been generated is valid.

For example, the processor may determine that the new collision avoidance path 820 is invalid when the new collision avoidance path 820 does not satisfy at least one of the first condition and the second condition. In other words, the processor may determine that the new collision avoidance path 820 is valid when the new collision avoidance path 820 satisfies the first condition and the second condition.

However, even though the new collision avoidance path 820 is determined to be valid, when the total length of the new collision avoidance path 820 is preset multiple times greater than the total length of the existing avoidance path 810, another collision avoidance path may be generated. Here, the preset multiple may be, but not limited to, 1.2 to 1.5 and may be determined by user settings.

Even though the total length of the new collision avoidance path 820 is preset multiple times greater than the total length of the existing avoidance path 810, when the risk of collision between an own vessel 8 and a target vessel is high, the own vessel 8 may navigate along the new collision avoidance path 820.

The method described in the present disclosure may prevent unnecessary operations of continuously modifying the derived avoidance path to prevent collision between an own vessel and a target vessel.

Additionally, a user's (or a navigator's) confusion caused by an avoidance path being continuously modified may be prevented.

The above-described method may be written as a program that may be executed on a computer and implemented on a general-purpose digital computer that runs the program by using a computer-readable recording medium. Additionally, the structure of data used in the above-described method may be recorded on a computer-readable recording medium through various means. The computer-readable recording medium includes a storage medium, such as a magnetic storage medium (e.g., ROM, RAM, USB, floppy disk, hard disk, etc.) or an optical readable medium (e.g., CD-ROM, DVD, etc.).

It will be understood by one of ordinary skill in the art related to the present embodiments that various changes may be made without departing from the fundamental characteristics of the disclosure described above. Therefore, the disclosed methods should be considered in descriptive sense only and are not for purposes of limitation. It should be construed that the scope of the claims is defined not by the descriptions above but by the appended claims and includes all differences falling within the scope equivalent thereto.

## Claims

1. An apparatus for determining validity of an avoidance path by using a plurality of buffers, the apparatus comprising:
a memory storing at least one program; and
at least one processor configured to execute the at least one program,
wherein the at least one processor is configured to generate a first buffer by using information of a target vessel,
generate a second buffer by using information of an own vessel,
generate the avoidance path for avoiding the target vessel at risk of collision with the own vessel by using the first buffer and the second buffer, and determine whether the avoidance path is valid
by using the first buffer and the second buffer.

2. The apparatus of claim 1, wherein
the at least one processor is further configured to generate the first buffer based on at least one of type information of the target vessel, specification information of the target vessel, and operation state information of the target vessel that are included in the information of the target vessel.

3. The apparatus of claim 1, wherein
the at least one processor is further configured to generate the second buffer based on at least one of steering performance information of the own vessel, specification information of the own vessel, and environmental information of the own vessel, which are included in the information of the own vessel.

4. The apparatus of claim 1, wherein
the at least one processor is further configured to generate a safety range by using the first buffer and the second buffer and generate the avoidance path based on the safety range.

5. The apparatus of claim 1, wherein
the at least one processor is further configured to determine that the avoidance path is valid in response to a result of determining that a first condition related to the first buffer and the second buffer and a second condition related to the second buffer are satisfied.

6. The apparatus of claim 5, wherein
the first condition requires that a distance between the own vessel and the target vessel while the own vessel is navigating along the avoidance path is greater than a safety range generated using the first buffer and the second buffer.

7. The apparatus of claim 5, wherein
the second condition requires that a location of the own vessel is within the second buffer while the own vessel is navigating on the avoidance path.

8. The apparatus of claim 1, wherein
the at least one processor is further configured to generate a control command for controlling the own vessel to navigate along the avoidance path in response to a result determining that the avoidance path is valid.

9. The apparatus of claim 1, wherein
the at least one processor is further configured to generate a new collision avoidance path in response to a result of determining that the avoidance path is invalid.

10. The apparatus of claim 9, wherein
the at least one processor is further configured to newly generate an avoidance path when a distance difference between the new collision avoidance path and the avoidance path is greater than a preset distance.

11. The apparatus of claim 1, wherein
the at least one processor is further configured to determine whether an initial path of the own vessel is valid by using the first buffer and the second buffer.

12. The apparatus of claim 1, wherein
the at least one processor is further configured to determine whether the avoidance path is valid at preset intervals.

13. A method of determining validity of an avoidance path by using a plurality of buffers, the method comprising:
generating a first buffer by using information of a target vessel that is at risk of collision with an own vessel;
generating a second buffer by using information of the own vessel;
determining whether the avoidance path for the own vessel to avoid the target vessel is valid based on whether a first condition related to the first buffer and a second condition related to the second buffer are satisfied; and
generating a command for controlling the own vessel to follow the avoidance path in response to a result of determining that the avoidance path is valid.

14. The method of claim 13, wherein
the first condition
requires that a location of the target vessel is outside a safety range, which is generated using the first buffer and the second buffer, while the own vessel is navigating along the avoidance path, and
the second condition
requires that a location of the own vessel is within the second buffer while the own vessel is navigating along the avoidance path.

15. A computer-readable recording medium having recorded thereon a program for executing the method of claim 13 on a computer.
